# EUROPÄISCHE PATENTSCHRIFT

(11) **EP 1 500 530 B1**
(45) Veröffentlichungstag und Bekanntmachung des Hinweises auf die Patenterteilung: **12.12.2007**
(21) Anmeldenummer: 04015012.0
(22) Anmeldetag: 25.06.2004
(51) Int. Cl.: B60G 11/12

(54) **Gefederte Aufhängung einer Starrachse am Fahrgestell-Rahmen eines Fahrzeugs, mit einer Federfangvorrichtung**
Mounting of a rigid axle suspension to vehicle frame comprising a spring catch
Suspension d'essieu rigide pour véhicules avec capture de resort

(30) Priorität: 21.07.2003 AT 11412003
(43) Veröffentlichungstag der Anmeldung: 26.01.2005
(73) Patentinhaber: MAN Nutzfahrzeuge Österreich AG, 4400 Steyr (AT)
(72) Erfinder: Mekina, Markus, 4400 Steyr (AT); Keppel, Manfred, 7540 Urbersdorf (AT)

(56) Entgegenhaltungen:
- GB-A- 215 383
- GB-A- 315 689
- GB-A- 1 202 482
- US-A- 1 941 331
- US-A- 4 872 653

## Beschreibung

Die Erfindung betrifft eine gefederte Aufhängung einer Starrachse am Fahrgestell-Rahmen eines Fahrzeugs, insbesondere Lastkraftwagen oder Omnibus, mit Merkmalen der im Oberbegriff des Anspruchs 1 angegebenen Art.

Die Erfindung geht aus von einer gefederten Aufhängung einer Starrachse wie aus der GB 1202482 A bekannt. Dabei ist eine Blattfeder vorne an einem rahmenfesten Lagerbock und hinten an einer unteren Lagerstelle einer Schwinge angelenkt. Die Schwinge selbst ist in ihrem oberen Bereich an einem rahmenfesten Lagerbock angelenkt. Außerdem ist der Schwinge eine - beim Bruch der Blattfeder wirksam werdende - Federfangvorrichtung zugeordnet. Diese weist einen am hinteren Lagerbock beabstandet von der oberen Schwingenlagerstelle und nach unten hinten verlagert angeordneten Fangbolzen auf, an dem die Schwinge im Falle eines Federbruchs mit ihrer hinteren Flanke etwa mittig zur Anlage kommt. Diese bekannte Lösung erfordert demnach einen nach unten verlängerten und entsprechend verbreiterten Lagerbock zur Lagerung der Schwinge und passenden Anordnung des Fangbolzens.

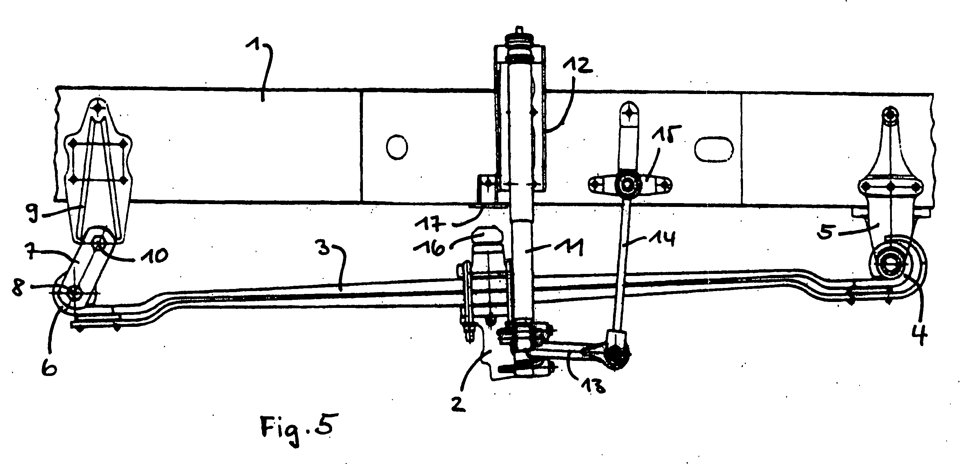

Bei gebauten Nutzfahrzeugen der Anmelderin, die bisher mit keiner solchen Federfangvorrichtung ausgestattet waren, ist die Schwinge - wie aus Fig. 5 ersichtlich, am unteren Ende eines hinteren Lagerbocks gelagert.

Rein der Vollständigkeit wegen sei auch noch auf die aus der US 4,872,653 A bekannte Starrachs-Aufhängung eingegangen. Diese ist abweichend von der gattungsgemäßen einer geschobenen Achse zugeordnet. Bei der dortigen Aufhängung kommt eine beim Bruch der Blattfeder im Bereich der hinteren Befestigung wirksam werdende Federfangvorrichtung zur Anwendung, die aus einem Anschlag an der das vordere Befestigungsorgan der Blattfeder bildenden Schwinge und einer rahmenfesten Anschlagfläche besteht. Im Gegensatz zur gattungsgemäßen Starrachs-Aufhängung ist im bekannten Fall die Blattfeder in umgekehrten Sinn gelagert, das heißt, die Schwinge ist am vorderen Ende gegeben. Dabei dient der Anschlag an der Schwinge primär zur Einfederungswegbegrenzung des Rahmens gegenüber der Achse und erst sekundär zum Fangen der Blattfeder, wenn diese an ihrer hinteren Lagerstelle bricht.

Es ist ausgehend von der GB 1202482 A Aufgabe der Erfindung, für ein Kraftfahrzeug mit einer gefederten Aufhängung wie in Fig. 5 offenbart eine Federfangvorrichtung zu schaffen, die es ermöglicht, dass der dort zur Lagerung der Schwinge vorgesehene hintere Lagerbock hinsichtlich seiner Bauart weitgehend unverändert verwendbar ist.

Diese Aufgabe wird bei einer gefederten Starrachs-Aufhängung der gattungsgemäßen Art durch die im Kennzeichen des Anspruchs 1 angegebene Bauart der Federfangvorrichtung gelöst.

Dabei ist der Fangbolzen erfindungsgemäß am hinteren Lagerbock oberhalb und beabstandet von der oberen Lagerstelle der Schwinge angeordnet, außerdem ist die Schwinge um einen Fangbereich nach oben bis in den Fangbereich verlängert und weist an diesem Fangbereich in Höhe des Fangbolzens wenigstens eine Anschlagfläche auf, mit der sie im Fall eines Federbruchs am Fangbolzen zur Anlage kommt.

Die erfindungsgemäße Federfangvorrichtung wird sofort wirksam, wenn die Blattfeder an ihrer vorderen Befestigungsstelle bricht. Die Blattfeder verschiebt sich in diesem Fall nach hinten. Diese Bewegung wird aber bereits nach kurzem Weg gestoppt, weil die bei dieser Längsverschiebung nach hinten ausgelenkte Schwinge schon nach kurzer Winkelbewegung mit der Anschlagfläche an ihrem Fangbereich am lagerbockfesten Fangbolzen zur Anlage kommt. Es steht dann der Achskörper der Starrachse zwar etwas schief, das heißt, nicht mehr senkrecht zur Fahrzeug-Längsachse, dieser Nachteil lässt sich aber bei langsamer Weiterfahrt über die Radlenkung ausgleichen. Im Normalbetrieb behindert die erfindungsgemäße Fangvorrichtung die Einfederung des Fahrgestell-Rahmens zur Achse hin nicht, da hierbei die Schwinge nicht in dem Maß wie beim Bruch der Feder nach hinten ausgeschwenkt wird.

Vorteilhafte Ausgestaltungen oder Details der erfindungsgemäßen Lösung sind in den Unteransprüchen gekennzeichnet.

Nachstehend ist die Erfindung anhand mehrerer in der Zeichnung dargestellter Ausführungsbeispiele noch näher erläutert. In der Zeichnung zeigen:
- Fig. 1, 2 und 3 je: ein Ausführungsbeispiel der erfindungsgemäßen Federfangvorrichtung in Seitenansicht,
- Fig. 4: die Federfangvorrichtung gemäß Fig. 1 in Ansicht von hinten, und
- Fig. 5: eine gefederte Starrachs-Aufhängung bekannter Bauart, der es aufgabengemäß eine Federfangvorrichtung zuzuordnen galt.

Zunächst wird zum besseren Verständnis der Erfindung auf den Stand der Technik gemäß Fig. 5 eingegangen. Dort ist von einem Fahrzeug, z. B. Lastkraftwagen oder Omnibus, ein Abschnitt eines ein Teil des Fahrgestells bildenden Rahmen-Längsträgers 1 gezeigt, an dem eine Starrachse mit ihrem Achskörper 2 gefedert angelenkt und befestigt ist. Hierzu dient eine entweder aus einem einzigen Federblatt oder einem Blattfederpaket bestehende Blattfeder 3, die mit ihrem vorderen Federauge 4 an einem rahmenfesten vorderen Lagerbock 5 befestigt sowie mit ihrem hinteren Federauge 6 an einer Schwinge 7, dort deren unterer Lagerstelle 8, angelenkt und über diese Schwinge 7 fliegend an einem hinteren rahmenfesten Lagerbock 9 aufgehängt ist, wobei die obere Lagerstelle an der Schwinge 7, mit der die Verbindung zum Lagerbock 9 hergestellt ist, mit 10 bezeichnet ist. Als weitere Teile der Starrachs-Aufhängung sind zu nennen ein Stoßdämpfer 11, der oben an einem rahmenfesten Lagerbock 12 und unten am Achskörper 2 angelenkt ist, und ein U-förmiger Stabilisator 13, der mit seinem Querschenkel am Achskörper 2 und mit seinen beiden U-Schenkeln an jeweils einem Haltestab 14 angelenkt ist, der mit seinem oberen Ende an einem rahmenfesten Bock 15 aufgehängt ist. Mit 16 ist ein Anschlagpuffer bezeichnet, der oben auf der Blattfeder 3 befestigt ist und im Zusammenwirken mit einer rahmenfesten Anschlagfläche 17 den Einfederungsweg des Rahmens 1 in Bezug auf den Achskörper 2 begrenzt.

Erfindungsgemäß kommt im Bereich der hinteren Anlenkung der Blattfeder 3 eine entsprechend abgewandelte Schwinge und abgewandelter hinterer Lagerbock zur Anwendung. Die erfindungsgemäße Schwinge ist mit 7' und der erfindungsgemäße hintere Lagerbock ist mit 9' bezeichnet. Diese beiden Bauteile 7', 9' sind zur Bildung der erfindungsgemäßen Federfangvorrichtung herangezogen und zwar wie folgt. Am hinteren Lagerbock 9' ist ein Fangbolzen 18 angeordnet und zwar oberhalb und beabstandet von der oberen Lagerstelle 10 für die Schwinge 7'. Außerdem ist die Schwinge 7' von der oberen Lagerstelle 10 aus gesehen nach oben bis in den Bereich des Fangbolzens 18 um einen Fangbereich 19 verlängert und weist an diesem Fangbereich 19 in Höhe des Fangbolzens 18 wenigstens eine Anschlagfläche 20 auf. Mit dieser Anschlagfläche 20 kommt die Schwinge 7' im Falle eines Bruches der Blattfeder 3 in ihren vorderen Lagerbereich 4 aufgrund einer dadurch während der Vorwärtsfahrt bedingten Längsverschiebung der Blattfeder 3 nach hinten und ihrer damit einhergehenden Verschwenkung um die obere Lagerstelle 10 am Fangbolzen 18 zum Anschlag. Dadurch wird eine gebrochene Blattfeder 3 nach hinten sicher am Rahmen abgestützt, was eine Weiterfahrt des Fahrzeugs mit verminderter Geschwindigkeit für eine begrenzte Strecke, z. B. zur nächsten Werkstatt oder Servicecenter ermöglicht. Bei intakter Blattfeder 3 bleibt die Anschlagfläche 20 in jedem Einfederungszustand des Rahmens 1 gegenüber dem Starrachskörper 2 mehr oder weniger weit vom Fangbolzen 18 beabstandet.

Nachstehend ist auf Details der verschiedenen in der Zeichnung dargestellten Ausführungsbeispiele der Erfindung eingegangen.

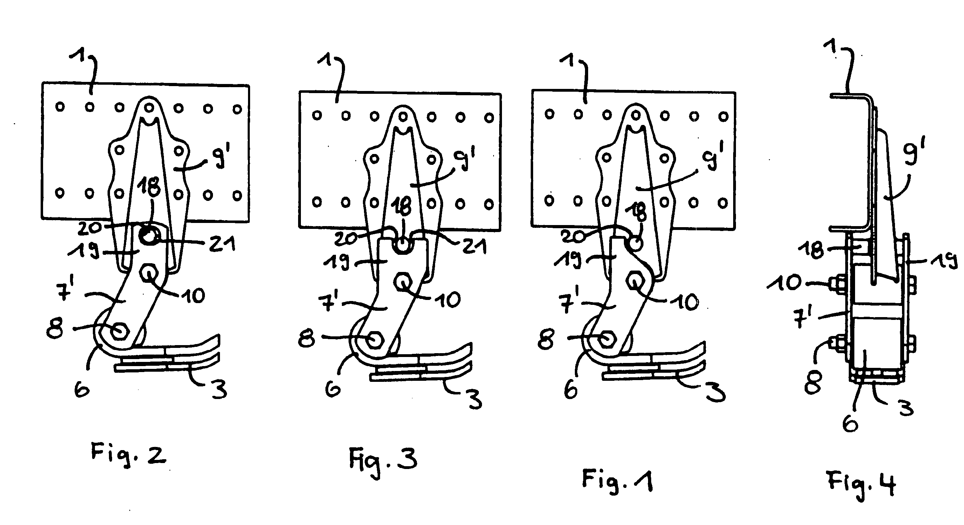

Im Fall von Fig. 1 ist eine Anschlagfläche 20 vorgesehen, die durch einen Abschnitt an einer - in Fahrtrichtung vorwärts gesehen - vorderen Stirnfläche am Fangbereich 19 der Schwinge 7' gegeben ist, welche Anschlagfläche 20 den Fangbolzen 18 hintergreift.

In den Fällen von Fig. 2 und 3 sind zwei Anschlagflächen, nämlich eine hintere Anschlagfläche 20 und eine vordere Anschlagfläche 21, am bzw. im Fangbereich 19 der Schwinge 7' vorgesehen.

Im Fall des Beispiels von Fig. 2 ist hierzu im Fangbereich 19 der Schwinge 7' ein Langloch oder eine Querbohrung mit gegenüber dem Durchmesser des Fangsbolzens 18 entsprechend größeren Durchmesser vorgesehen, in welches Langloch bzw. welche Querbohrung der Fangbolzen 18 eintaucht und dessen bzw. deren vorderer und hinterer bogenförmiger Wandabschnitt die vordere und hintere Anschlagfläche 20, 21 bilden.

Im Fall des Beispiels gemäß Fig. 3 ist am Fangbereich 19 der Schwinge 7' ein nach oben offenes Maul vorgesehen, dessen vordere und hintere Begrenzungsfläche die vordere und hintere Anschlagfläche 20, 21 bilden.

Zwei Anschlagflächen 20, 21 haben den Vorteil, dass bei gebrochener Blattfeder 3 nicht nur eine Vorwärtsfahrt, sondern auf ein Rückwärtsfahren mit jeweils auf rahmenseitigen Anschlag gesetzter Blattfeder 3 möglich ist.

Der Fangbolzen 18 kann beispielsweise durch einen zylindrischen Stahlbolzen gebildet sein, der eine Querbohrung im hinteren Lagerbock 9', diesen innen- und außenseitig überragend durchdringt und am Lagerbock 9' angeschweißt ist.

Die erfindungsgemäße Schwinge 7' kann beispielsweise durch zwei identisch und parallel zueinander angeordnete Laschen - siehe Fig. 4 - gebildet sein, die über eine Distanzhülse innerhalb des vorderen Federauges 6 und eine Distanzhülse 22 am hinteren Lagerbock 9' auf Parallelabstand gehalten sind.

## Patentansprüche

1. Gefederte Aufhängung einer Starrachse am Fahrgestell-Rahmen eines Fahrzeugs, insbesondere Lastkraftwagen oder Omnibus, wobei der Achskörper (2) unten an einer Blattfeder (3) befestigt ist, die vorne an einem rahmenfesten Lagerbock (5) und hinten an einer unteren Lagerstelle (8) einer Schwinge (7) angelenkt ist, die wiederum über eine obere Lagerstelle (10) schwenkbeweglich an einem rahmenfesten hinteren Lagerbock (9) angelenkt ist und der eine - beim Bruch der Blattfeder (3) an deren vorderem Befestigungsbereich (4) wirksam werdende - Federfangvorrichtung zugeordnet ist, die einen am hinteren Lagerbock (9) beabstandet von der oberen Lagerstelle (10) der Schwinge (7) angeordneten Fangbolzen (18) aufweist, an dem die Schwinge (7) bei einem Federbruch mit wenigstens einer Anschlagfläche zur Anlage kommt, aber bei intakter Blattfeder (3) in jedem Einfederungszustand des Rahmens (1) in Bezug auf den Achskörper (2) der Starrachse ein mehr oder weniger großes Maß vom Fangbolzen (18) beabstandet bleibt, **dadurch gekennzeichnet, dass** der Fangbolzen (18) am hinteren Lagerbock (9') oberhalb und beabstandet von der oberen Lagerstelle (10) der Schwinge (7') angeordnet ist, dass die Schwinge (7') um einen Fangbereich (19) nach oben bis in den Bereich des Fangbolzens (18) verlängert ist, und dass an diesem Fangbereich (19) der Schwinge (7') in Höhe des Fangbolzens (18) die wenigstens eine Anschlagfläche (20, 21) angeordnet ist.

2. Aufhängung nach Anspruch 1, **dadurch gekennzeichnet, dass** nur eine Anschlagfläche (20) vorgesehen und diese durch einen Abschnitt an einer - in Fahrtrichtung vorwärts gesehen - vorderen Stirnfläche am Fangbereich (19) der Schwinge (7') gegeben ist, welche Anschlagfläche (20) den Fangbolzen (18) hintergreift.

3. Aufhängung nach Anspruch 1, **dadurch gekennzeichnet, dass** zwei Anschlagflächen (20, 21), nämlich eine hintere (20) und eine vordere (21), am bzw. im Fangbereich (19) der Schwinge (7') vorgesehen sind.

4. Aufhängung nach Anspruch 3, **dadurch gekennzeichnet, dass** im Fangbereich (19) der Schwinge (7') ein Langloch oder eine Querbohrung mit gegenüber dem Durchmesser des Fangbolzens (18) größerem Durchmesser vorgesehen ist, in das bzw. die der Fangbolzen (18) eintaucht, und dessen bzw. deren vorderer und hinterer Wandabschnitt die Anschlagflächen (20, 21) bilden.

5. Aufhängung nach Anspruch 3, **dadurch gekennzeichnet, dass** am Fangbereich (19) der Schwinge (7') ein nach oben offenes Maul vorgesehen ist, dessen vordere und hintere Begrenzungsflächen die beiden Anschlagflächen (20, 21) bilden.

6. Aufhängung nach Anspruch 1, **dadurch gekennzeichnet, dass** der Fangbolzen (18) durch einen zylindrischen Stahlbolzen gebildet ist, der eine Querbohrung im hinteren Lagerbock (9'), diesen innen- und außenseitig überragend, durchdringt und am Lagerbock (9') angeschweißt ist.

## Claims

1. Sprung suspension system for a rigid axle in a chassis frame of a vehicle, particularly a truck or bus/coach, whereby the lower end of the axle body (2) is fastened to a leaf spring (3) whose front end is located on a frame-mounted bearing block (5) and whose rear end is located on a lower bearing point (8) of a rocker (7), which in turn is slewably located via an upper bearing point (10) on a frame-mounted rear bearing block (9) and to which a spring retaining device is allocated - which spring retaining device becomes effective in the front fastening area (4) of the leaf spring (3) should said spring (3) rupture - and features a retaining pin (18) arranged at the rear bearing block (9) and located at a distance to the upper bearing point (10) of the rocker (7) which contacts said retaining pin (18) with at least one stop face if the spring (3) breaks, but, if the leaf spring (3) is intact, remains at a more or less large distance relative to the retaining pin (18) during any compression condition of the frame (1) relative to the axle body (2) of the rigid axle, **characterised in that** the retaining pin (18) is located at the rear bearing block (9') above and at a distance to the upper bearing point (10) on the rocker (7'), that the rocker (7') is extended upwards by a retaining area (19) as far as into the area of the retaining pin (18) and that the at least one stop face (20, 21) is arranged at the height of the retaining pin (18) in this retaining area (19) of the rocker (7').

2. Suspension system according to Claim 1, **characterised in that** only one stop face (20) is provided, namely in the form of a section on - as viewed in forward-driving direction - the front end face in the retaining area (19) on the rocker (7'), which stop face (20) encompasses the retaining pin (18).

3. Suspension system according to Claim 1, **characterised in that** two stop faces (20, 21), namely a rear one (20) and a front one (21), are provided at or in the retaining area (19) of the rocker (7').

4. Suspension system according to Claim 3, **characterised in that** a longitudinal hole or a transverse bore with a diameter larger than that of the retaining pin (18) is provided in the retaining area (19) of the rocker (7'), into which hole or bore the retaining pin (18) penetrates, the front and rear wall sections of said hole or bore forming the stop faces (20, 21).

5. Suspension system according to Claim 3, **characterised in that** a jaw open towards the top is provided in the retaining area (19) of the rocker (7'), the front and rear limiting faces of which jaw forming the two stop faces (20, 21).

6. Suspension system according to Claim 1, **characterised in that** the retaining pin (18) is formed by a cylindrical steel pin which penetrates a transverse bore in the rear bearing block (9'), projects beyond said rear bearing block (9') on the inside and outside and is welded to the bearing block (9').

## Revendications

1. Suspension amortie d'un essieu rigide sur le cadre de châssis d'un véhicule, en particulier d'un camion ou d'un bus, auquel cas le corps d'essieu (2) est fixé par le dessous sur un ressort à lame (3) qui est articulé à l'avant sur un support de palier (5) fixé sur le cadre et à l'arrière sur un point d'appui inférieur (8) d'un bras oscillant (7) qui est à son tour articulé de manière pivotable sur un support de palier arrière (9) fixé sur le cadre par le biais d'un point d'appui supérieur (10) et un dispositif de retenue de ressort - devenant efficace au niveau de sa zone de fixation avant (4) en cas de rupture du ressort à lame (3) - qui présente une douille de retenue (18) disposée sur le support de palier arrière (9) à une certaine distance du point d'appui supérieur (10) du bras d'oscillant (7), douille sur laquelle le bras oscillant (7) vient en appui à l'aide d'au moins une surface de butée en cas de rupture de ressort, mais reste à une certaine distance à une cote plus ou moins grande de la douille de retenue (18) dans chaque état de débattement du cadre (1) en référence au corps d'essieu (2) en cas de ressorts à lames intacts, **caractérisée en ce que** la douille de retenue (18) est disposée sur le support de palier arrière (9') au-dessus et à une certaine distance du point d'appui supérieur (10) du bras oscillant (7'), **en ce que** le bras oscillant (7') est prolongé d'une partie de retenue (19) vers le haut jusqu'au niveau de la douille de retenue (18) et **en ce que**, au niveau de la partie de retenue (19) du bras oscillant (7'), au moins une surface de butée (20, 21) est disposée à hauteur de la douille de retenue (18).

2. Suspension selon la revendication 1, **caractérisée en ce que** seule une surface de butée est prévue et celle-ci existe par une découpe sur une surface frontale avant - vue vers l'avant dans le sens de la marche - au niveau de la partie de retenue (19) du bras oscillant (7') dont la surface de butée (20) vient en prise derrière la douille de retenue (18).

3. Suspension selon la revendication 1, **caractérisée en ce que** deux surfaces de butée (20, 21), à savoir une arrière (20) et une avant (21), sont prévues au niveau ou dans la partie de retenue (19) du bras oscillant (7').

4. Suspension selon la revendication 3, **caractérisée en ce que**, dans la partie de retenue (19) du bras oscillant (7') est prévu un trou long ou un alésage transversal avec un diamètre plus important par rapport au diamètre de la douille de retenue (18), dans lequel est enfoncée la douille de retenue (18) et dont la découpe de paroi avant et arrière forment les surfaces de butée (20 ,21).

5. Suspension selon la revendication 3, **caractérisée en ce que**, au niveau de la partie de retenue (19) du bras oscillant (7') est prévue un bec ouvert vers le haut dont les surfaces de délimitation avant et arrière forment les deux surfaces de butée (20 ,21).

6. Suspension selon la revendication 1, **caractérisée en ce que** la douille de retenue (18) est formée d'une douille Cylindrique en acier qui pénètre dans l'alésage transversal dans le support de palier arrière (9'), dépassant celui-ci côté intérieur et côté extérieur, et est soudée au support de palier (9').
